# FASCICULE DE BREVET EUROPEEN

(11) **EP 3 111 276 B1**
(45) Date de publication et mention de la délivrance du brevet: **16.10.2019**
(21) Numéro de dépôt: 15714855.2
(22) Date de dépôt: 25.02.2015
(51) Int. Cl.: B09B 3/00, B09B 5/00, G02F 1/1341

(54) **DISPOSITIF ET PROCEDE D'EXTRACTION DES CRISTAUX LIQUIDES CONTENUS DANS UN ELEMENT DU TYPE COMPRENANT UN PREMIER ET UN DEUXIEME SUPPORT**
VORRICHTUNG UND VERFAHREN ZUR EXTRAKTION VON FLÜSSIGKRISTALLEN IN EINEM ELEMENT MIT EINEM ERSTEN UND ZWEITEN TRÄGER
DEVICE AND METHOD FOR EXTRACTING THE LIQUID CRYSTALS CONTAINED IN AN ELEMENT THAT COMPRISES A FIRST AND A SECOND SUPPORT

(30) Priorité: 27.02.2014 FR 1451573
(43) Date de publication de la demande: 04.01.2017
(73) Titulaire: Centre National de la Recherche Scientifique (C.N.R.S.), 75794 Paris Cedex 16 (FR)
(72) Inventeur: MASCHKE, Ulrich, 59655 Villeneuve d'Ascq (FR); MOUNDOUNGOU, Idriss, 78193 Trappes Cedex (FR); FOSSI TABIEGA, Guy Joel, 59655 Villeneuve d'Ascq (FR)
(74) Mandataire: Lavoix
(86) Numéro de dépôt international: PCT/FR2015/050452
(87) Numéro de publication internationale: WO 2015/128582

(56) Documents cités:
- JP-A- 2002 126 688
- JP-A- 2002 254 059
- JP-A- 2010 089 075
- JP-A- 2010 119 967
- LI J ET AL: "Recovery of valuable materials from waste liquid crystal display panel", WASTE MANAGEMENT, ELSEVIER, NEW YORK, NY, US, vol. 29, no. 7, 1 juillet 2009 (2009-07-01), pages 2033-2039, XP026084229, ISSN: 0956-053X, DOI: 10.1016/J.WASMAN.2008.12.013 [extrait le 2009-01-20]

## Description

La présente invention concerne un procédé d'extraction des cristaux liquides contenus dans un élément du type comprenant un premier et un deuxième support.

Un écran LCD est constitué de deux plaques de verre collées et scellées l'une à l'autre pour former un seul élément appelée la dalle.

La dalle est formée de la plaque TFT et de la plaque filtre coloré qui sont montées en face-à-face de manière à former entre elles, un espace qui est rempli de cristaux liquides. La plaque TFT est une plaque de verre recouverte d'une couche de silicium gravée qui forme des transistors (« Thin Film Transistor ») associés à des capacités de stockage. Un film polarisant en acétate de polymère est collé sur sa face externe. La surface de la plaque TFT qui est montée en regard de la plaque filtre coloré est constituée d'une matrice ligne-colonne d'ITO qui permet d'établir les connexions électriques de chaque transistor.

La plaque filtre coloré est une plaque de verre sur laquelle sont gravés les pixels constitués des trois couleurs: rouge, vert et bleu. Un film polarisant en acétate de polymère est collé sur sa face externe. Toute la surface de la face montée en regard de la plaque TFT est recouverte d'une couche d'ITO d'environ 0,2µm d'épaisseur. Les pixels précités sous situés sous la couche d'ITO. La taille d'un pixel est de 240 x 80µm. Pour augmenter l'effet de contraste, l'ensemble des sous-pixels est entouré d'une zone opaque de couleur noire appelée Black Matrix, également située sous la couche d'ITO.

L'espace entre ces deux plaques (qui présente une épaisseur de 3 à 5µm) est rempli avec des cristaux liquides. La dalle est reliée à tous les dispositifs électronique et électrique puis intégré dans la coque plastique pour former l'écran de télévision ou d'ordinateur.

En fin de vie de l'appareil, se pose le problème du démantèlement et de la séparation de chaque constituant pour la valorisation. D'où la nécessité de trouver une solution qui permet d'isoler chaque partie de l'écran sans causer la dégradation et la pollution des matériaux récupérés. En particulier, il est important d'un point de vue environnemental de pouvoir extraire les cristaux liquides ; d'un point de vue économique, leur recyclage s'avère aussi intéressant.

Par ailleurs, les fabricants d'écrans n'utilisent pas tous les mêmes cristaux liquides et ceux-ci se modifient de plus dans le temps ce qui complique leur recyclage à l'échelle industrielle.

L'abrégé du document TW 527232 décrit un procédé de traitement d'un écran LCD qui met en oeuvre la séparation des deux plaques de la dalle puis leur traitement par immersion dans des bains d'alcools soumis à ultrasons pour dissoudre à la fois les cristaux liquides et le filtre coloré précité.

Un tel procédé ne permet pas de recycler facilement les cristaux liquides extraits du fait de la trop grande complexité du mélange obtenu et de la contamination engendrée, notamment par les bris de verre, la présence d'autres particules, comme par exemple des particules métalliques ou autres provenant la dissolution du filtre coloré et par les films de couverture des deux plaques qui sont également dissouts par la solution alcoolique.

Un but de la présente invention est de fournir un nouveau procédé d'extraction des cristaux liquides contenus dans un élément tel que précité.

Un autre but de la présente invention est de proposer un procédé tel que précité qui facilite le recyclage des cristaux liquides, notamment du fait d'une limitation des polluants tant en quantité qu'en nature lors de l'extraction.

Un autre but de la présente invention est de proposer un procédé tel que précité qui soit facile à mettre en oeuvre à l'échelle industrielle.

Un autre but de la présente invention est de proposer un procédé d'extraction des cristaux liquides qui soit rapide à mettre en oeuvre.

Un autre but de la présente invention est de proposer un procédé d'extraction et de recyclage des cristaux liquides contenus dans un élément tel que précité qui présente un bon rendement.

Pour atteindre au moins un des buts précités, la présente invention propose un procédé d'extraction des cristaux liquides contenus dans un élément du type comprenant un premier et un deuxième support présentant chacun une face fonctionnelle, lesdites faces fonctionnelles étant montées en regard l'une l'autre de manière à créer un espace contenant lesdits cristaux liquides, selon lequel on sépare lesdits premier et deuxième supports l'un de l'autre, lesdites faces fonctionnelles alors étant au moins partiellement recouvertes d'un film de cristaux liquides. De manière caractéristique, selon l'invention, on met en contact ladite face fonctionnelle dudit premier et/ou deuxième support avec une solution contenant au moins un solvant apte à dissoudre lesdits cristaux liquides présents sur ladite face fonctionnelle de manière à ce que ladite solution ne soit pas en contact avec la face opposée à ladite face fonctionnelle.

Ainsi, selon l'invention, la face fonctionnelle peut seulement affleurer la surface libre de la solution. Le support peut également être disposé dans la solution, le niveau de solution ne dépassant pas alors l'épaisseur du support.

C'est en effet le mérite des inventeurs que d'avoir mis en évidence que la dissolution des cristaux liquides ne nécessite pas l'immersion du support. Au contraire, le seul contact de la face fonctionnelle recouverte de cristaux liquides avec la solution précitée permet de dissoudre les cristaux liquides dans la solution sans dissoudre d'autres matériaux.

L'élément traité peut être un écran d'affichage tel qu'un écran d'ordinateur ou un écran de télévision ou un écran de dispositif d'affichage public.

La solution n'est pas limitée selon l'invention. Il peut s'agir d'une solution organique contenant au moins un solvant choisi parmi l'acétone, l'isopropanol, l'éther de pétrole et les mélanges d'au moins deux de ces solvants. Par « éther de pétrole », on désigne au sens de la présente invention, le mélange d'alcanes correspondant à la fraction de distillation du pétrole ayant le même point d'ébullition que l'éther éthylique. Ce terme désigne en particulier, la fraction 40 à 65 °C, appelée essence G. Tout autre solvant ou mélanges de apolaire aprotique peut être utilisé selon l'invention.

Selon un mode de mise en oeuvre, ladite solution est de l'acétone.

Avantageusement, on déplace ledit premier et/ou deuxième support dans ladite solution ou à la surface libre de ladite solution. Ce déplacement a pour effet de briser ou d'empêcher la formation d'un film de cristaux liquides à la surface de la solution. Les cristaux liquides ont en effet tendance à former un tel film qui sature localement la solution et empêche la dissolution des cristaux liquides présents sur la face fonctionnelle dans la solution.

Selon un mode de mise en oeuvre, on dispose ladite face fonctionnelle de manière à ce qu'elle soit inclinée vers la surface libre de ladite solution. Ceci permet d'éviter la formation d'un film d'air ou de bulles d'air entre les deux surfaces en contact.

Selon un mode de mise en oeuvre particulier qui peut être combiné avec ceux précités, on augmente le niveau de ladite solution de manière à mettre en contact ladite face fonctionnelle avec ladite surface libre de ladite solution. Ceci peut être mis en oeuvre lorsque le support est disposé au-dessus de la surface libre de la solution.

Avantageusement la solution est à une température sensiblement égale ou supérieure à 15°c et sensiblement égale ou inférieure à 30°C, de préférence sensiblement égale 20°C.

Avantageusement, on génère des ultrasons dans ladite solution de manière à provoquer le phénomène de cavitation, notamment au niveau de ladite face fonctionnelle. Les ultrasons générés favorisent l'arrachage des cristaux liquides situés sur la face fonctionnelle.

Ces ultrasons peuvent avoir une fréquence sensiblement égale ou supérieure ou égale à 15KHz et sensiblement égale ou inférieure ou égale à 30KHz Hz.

Avantageusement, on génère des ultrasons ayant une densité de puissance sensiblement égale ou supérieure à 8W/L et de préférence sensiblement égale à 24W/L.

Avantageusement, on crée une circulation de ladite solution au moins au niveau de ladite surface libre de ladite solution. Cette mise en circulation de la solution permet d'évacuer la chaleur éventuellement produite par les ultrasons ou autre. En effet, cette mise en circulation augmente la surface de la solution en contact avec l'air extérieur. Cette mise en circulation permet donc de stabiliser la température de la solution acide. La mise en circulation précitée permet également d'homogénéiser la solution: on obtient ainsi une solution contenant une concentration homogène en composés dissouts, à proximité de la face fonctionnelle et ailleurs. La solution n'est ainsi pas saturée en cristaux liquides au niveau de la face fonctionnelle ce qui diminuerait son efficacité. La circulation permet d'éviter la formation d'un film de cristaux liquides à la surface de la solution. La mise en circulation peut être mise en oeuvre de diverses manières, par agitation, par pompage et injection ou tout autre moyen connu.

La température de la solution peut être maintenue par tout moyen approprié. Les ultrasons provoquent un échauffement de la solution. Avantageusement, on maintient la température de ladite solution en contact avec ladite face fonctionnelle par ajout d'une quantité donnée d'une solution contenant au moins un solvant apte à dissoudre les cristaux liquides, ladite solution étant à une température donnée. Ceci permet également de créer un mouvement dans la solution. Selon l'invention, les supports ne sont pas limités en forme et en matériaux. Le premier et/ou deuxième support peut comporter une face fonctionnelle recouverte d'un filtre coloré lui-même au moins partiellement recouvert par une couche d'ITO et ladite face opposée dudit premier et/ou deuxième support peut comporter un film solide en matériau soluble dans ladite solution. Le premier et/ou deuxième support peut être en verre, en matière plastique ou en tout autre matériau.

Dans le cas précité, le fait de ne pas mettre en contact la face opposée à la face fonctionnelle avec la solution diminue grandement les risques de contamination des cristaux liquides contenus dans la solution qui deviennent ainsi facilement recyclables.

La récupération des cristaux liquides peut être mise en oeuvre par distillation ; lorsque la concentration en cristaux liquides dans ladite solution atteint une valeur donnée, on distille, de préférence sous vide, ladite solution de manière à récupérer un mélange de cristaux liquides. Avantageusement, on filtre on filtre la solution avant distillation afin de séparer les particules solides des cristaux liquides

Avantageusement, on filtre ledit mélange de cristaux liquides obtenu.

Avantageusement, après filtration, on sépare par chromatographie les différents cristaux liquides en réalisant une chromatographie éclair (« flash ») dudit mélange de manière à obtenir au moins deux fractions.

Selon un mode particulier de mise en oeuvre, on analyse une petite quantité de chacune desdites fractions afin de déterminer la composition dudit mélange et de choisir les paramètres opératoires permettant de séparer les divers cristaux liquides contenus dans ladite fraction et l'on fait passer le reste de ladite fraction sur une colonne chromatographique préparative en utilisant lesdits paramètres opératoires. Par « paramètres opératoires », on entend au sens de la présente invention, notamment, la température de l'éluant, sa nature, la pression appliquée

Avantageusement, lorsque la concentration en cristaux liquides dans ladite solution atteint ladite valeur donnée, on renouvelle ladite solution et on teste sur ladite solution contenant ladite quantité donnée de cristaux liquides, lesdits paramètres opératoires déterminés lors du traitement des fractions obtenues la solution précédente. On réalise ainsi une extraction en batch. Quand le bain de solution est saturé en cristaux liquides, on test les paramètres obtenus pour le traitement du bain précédent. Cela permet de prendre en compte la diversité de nature des cristaux liquides utilisés selon les fabricants d'écrans et les modifications dans le temps des cristaux liquides qui réagissent entre eux, par exemple, ou sont dégradés.

La présente invention concerne également un dispositif permettant la mise en oeuvre du procédé selon l'invention et qui comprend au moins une cuve remplie d'une solution contenant au moins un solvant apte à dissoudre les cristaux liquides, ladite solution forme une surface libre, le dispositif comporte, en outre, des moyens de convoyage d'un support présentant une face fonctionnelle au moins partiellement recouverte d'une couche de cristaux liquides et ladite cuve et lesdits moyens de convoyage sont adaptés pour mettre en contact ladite face fonctionnelle avec ladite solution de manière à ce que ladite solution ne soit pas en contact avec la face opposée à ladite face fonctionnelle.

Avantageusement, lesdits moyens de convoyage sont conformés pour faire affleurer ladite face fonctionnelle au niveau de ladite surface libre, ce qui permet d'éviter tout contact entre la solution et la face opposée.

Avantageusement, lesdits moyens de convoyage sont conformés pour déplacer ledit support dans ladite cuve, au moins lorsque ladite face fonctionnelle est en contact avec ladite solution contenue dans ladite cuve. Le temps de passage du support et les dimensions de la cuve sont ajustées pour obtenir la dissolution souhaitée des cristaux liquides.

Les moyens de convoyage ne sont pas limités selon la présente invention. Il peut s'agir de câbles ou de cordes, de moyens de succion du support, ou d'un grillage en acier inoxydable, par exemple.

La cuve peut comporter des moyens générateurs d'ultrasons.

Selon un mode de réalisation, la cuve comporte un bord sensiblement au niveau duquel se situe ladite surface libre formée par ladite solution, au moins une ouverture de débordement est ménagée dans ledit bord, ladite cuve comprend, en outre, un bac de récupération adapté pour recevoir la solution qui déborde par ladite ouverture de débordement et ledit dispositif comporte des moyens formant pompe conformés pour injecter la solution contenue dans ledit bac de récupération dans ladite cuve et créer ainsi une circulation de ladite solution. Les moyens formant pompe permettent également d'augmenter les échanges thermiques avec l'extérieur de manière à refroidir la solution ; en effet, lorsque la solution quitte la cuve et circule dans les conduites reliant la pompe à la cuve, la solution se refroidit à travers les conduites en contact avec l'air ambiant.

Avantageusement, le dispositif de l'invention permet également le recyclage des cristaux liquides et comporte, en outre, une colonne à distiller permettant de séparer les cristaux liquides de ladite solution, un filtre pour filtrer le mélange de cristaux liquides obtenus par distillation, une colonne de chromatographie éclair pour fractionner le mélange filtré, une colonne analytique couplée à des moyens d'identification des composés contenus dans chacune des fractions pour définir les paramètres opératoires à mettre en oeuvre pour séparer lesdits composés et une colonne préparative pour séparer lesdits composés de ladite fraction qui est commandée par des moyens de contrôle couplés à ladite colonne analytique et auxdits moyens d'identification de manière à fonctionner en mettant en oeuvre lesdits paramètres opératoires.

La présente invention, ses caractéristiques et les divers avantages qu'elle procure apparaitront mieux à la lecture de la description qui suit d'un mode de réalisation de la présente invention, cité en tant qu'exemple non limitatif et qui fait référence aux dessins annexés sur lesquels :
- la Fig. 1 représente une vue schématique selon une coupe longitudinale d'un mode de réalisation du dispositif de l'invention ;
- la Fig. 2 représente une vue schématique en coupe selon la largeur de la cuve du dispositif de la Fig. 1 ;
- la Fig. 3 représente la disposition des moyens générateurs d'ultrasons dans la cuve du dispositif de la Fig. 1 ; et
- la Fig. 4 représente l'installation de séparation qui permet le recyclage des cristaux liquides ;

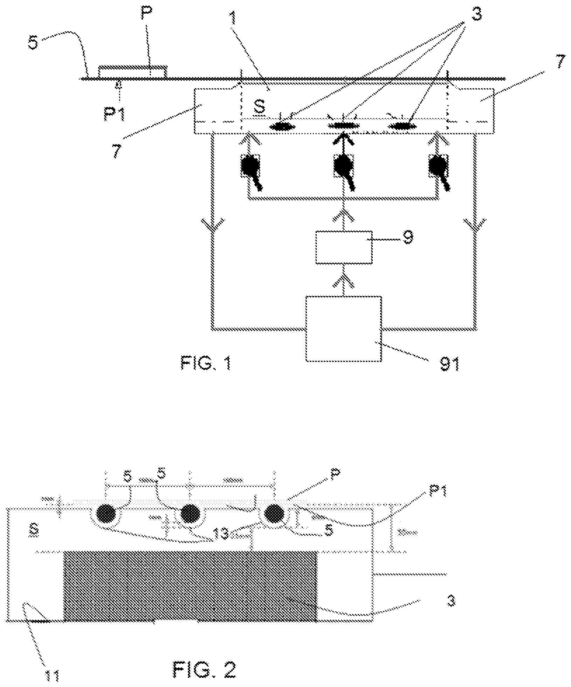

En référence à la Fig. 1, un mode de réalisation particulier du dispositif de l'invention va maintenant être décrit.

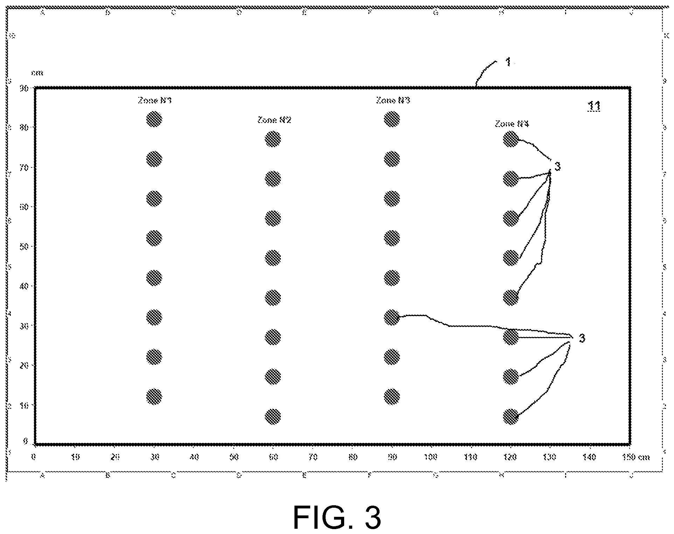

Comme représenté sur la Fig. 1, le dispositif de l'invention comporte une cuve 1, de section sensiblement rectangulaire, dont le fond 11 est équipé de cônes générateurs d'ultrasons 3 répartis sur le fond 11 de la cuve. La répartition des cônes sera plus amplement détaillée en référence à la Fig. 3. Le dispositif de l'invention comporte des moyens de convoyage qui comportent dans le cas présent une pluralité de câbles 5, parallèles entre eux. De chaque côté de la cuve 1 se trouve un bac de récupération 7 qui permet de récupérer la solution débordant de la cuve 1. Le dispositif comporte également une pompe 9 et un réservoir 91. Le réservoir 91 est relié par des conduites au fond de chacun des bacs de récupération 7. La pompe 9 est reliée au réservoir 91 et à trois points d'injections ménagés dans le fond 11 de la cuve 1. La pompe 9 est adaptée pour aspirer la solution contenue dans le réservoir 91 et l'injecter dans la cuve 1 de manière à faire monter le niveau de la solution S dans la cuve 1.

La Fig. 1 représente le dispositif de l'invention avant passage du support P au-dessus de la cuve 1. Le support P présente une épaisseur e et comporte une face fonctionnelle P1 recouverte d'une couche de cristaux liquides. La face fonctionnelle P1 est posée sur les câbles 5. Les câbles 5 sont tendus au-dessus de la cuve 1 et sont distants de la surface de la solution S contenue dans la cuve 1. Des moyens de mise en mouvement (non représentés) permettent de déplacer les câbles 5 selon leur longueur, ce qui a pour effet de déplacer le support P posé sur les câbles 5 vers la cuve 1. Les câbles 5 sont parallèles à la longueur de la cuve 1.

Comme représenté sur la Fig. 2, les parois de la cuve 1 qui sont perpendiculaires aux câbles 5 comportent des ouvertures de débordement 13 pour le passage des câbles 5. Les ouvertures de débordement 13 débouchent au niveau du bord supérieur de la cuve 1. Ainsi, lorsque la pompe 9 est à l'arrêt, la surface de la solution S se trouve au niveau du fond des ouvertures de débordement 13 ; les câbles 5 ne sont ainsi pas en contact avec la solution. Un espace d'environ 1mm sépare les câbles 5 du fond des ouvertures 13. Dans le mode de réalisation représenté, le dispositif de l'invention comporte trois câbles 5 parallèles qui passent chacun dans une ouverture de débordement 13 précitée. Les ouvertures de débordement 13 permettent à la solution de déborder dans les bacs de récupération 7, lorsque son niveau dépasse le fond de ces dernières.

La Fig. 3 représente la disposition des cônes générateurs d'ultrasons 3 sur le fond 11 de la cuve 1. Les cônes 3 sont disposés selon 4 lignes parallèles à la largeur de la cuve 1 et donc perpendiculaires aux câbles 5. Chaque ligne comprend 8 générateurs d'ultrasons 3. Si l'on considère deux lignes contigües, les cônes 3 d'une ligne sont disposés au niveau des espaces qui séparent les cônes 3 de l'autre ligne.

Le procédé de l'invention va maintenant être décrit en référence aux Fig. 1 et 2. Le support P est disposé sur les câbles 5, la face fonctionnelle P1 recouverte d'un film de cristaux liquides en appui sur ces derniers. Les câbles 5 sont ensuite mis en mouvement. Le mouvement des câbles 5 entraîne le support P vers la cuve 1. La vitesse de déroulement des câbles 5 est ajustée pour obtenir une dissolution satisfaisante du film de cristaux liquides . La pompe 9 est mise en route avant que le support P ne se trouve au-dessus de la cuve 1. Le niveau de la solution dans la cuve 1 augmente et celle-ci déborde au niveau des ouvertures de débordement 13 sans que son niveau ne s'abaisse. Le support P approche de la cuve 1 et la surface fonctionnelle affleure alors la surface libre de la solution. Ce contact entre les deux surfaces, se fait sans qu'il n'y ait de bulles ou de film d'air entre les deux surfaces. Les ultrasons générés accélèrent la dissolution des cristaux liquides dans la solution. Le débordement de la solution au niveau des ouvertures de débordement 13 permet de ne pas avoir un film de cristaux liquides à la surface de la solution, ce qui gênerait la dissolution du film de cristaux liquides recouvrant la face fonctionnelle P1. Les câbles 5 étant toujours en mouvement, le support P continue d'avancer dans la solution S, la pompe 9 ajoute en continue de la solution provenant du réservoir 91 et/ou des bacs de récupération 7 ce qui permet de maintenir le niveau de la solution S dans la cuve, de refroidir cette dernière et d'éviter la formation d'un film de cristaux liquides à la surface de la solution. Les cônes générateurs d'ultrasons 3 génèrent des ultrasons qui provoquent la cavitation au niveau de la face P1 : des microbulles se forment au niveau de la surface de la face P1 ; ces microbulles implosent à la surface de la face fonctionnelle du support, favorisant un décrochage plus rapide des cristaux liquides. On constate que le film de cristaux liquides est dissout car la face fonctionnelle ne présente plus un aspect huileux.

La solution contenue dans la cuve 1 peut servir à traiter plusieurs supports. Elle est ensuite traitée afin de recycler les cristaux liquides.

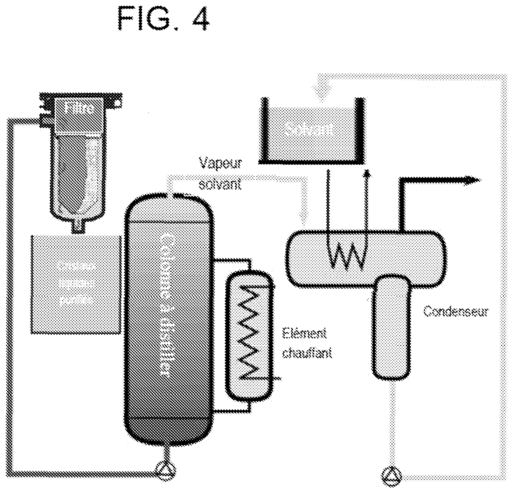

En référence à la Fig. 4, la solution contenue dans la cuve 1 et contenant une quantité donnée de cristaux liquides est introduite dans une colonne à distiller 100 de manière à évaporer la solution. On obtient d'une part la solution régénérée qui est recyclée vers la cuve 1 et un mélange de cristaux liquides. Ce mélange est filtré sur un filtre à poche 200. Le mélange filtré est ensuite analysé.

### EXEMPLE

L'efficacité du procédé a été testé grâce à des essais avec une machine pilote sur une trentaine d'écrans LCD de différentes dimensions. Le résultat obtenu est un nettoyage parfait du substrat de verre démontrant ainsi la solubilisation des cristaux liquides dans le solvant qui dans le cas présent était de l'acétone. Comme les cristaux liquides se présentent sous la forme de gel visqueux, ils laissent apparaître sur la surface de la plaque de verre un aspect huileux facilitant ainsi, le contrôle visuel de leur solubilisation.

La cuve pilote a été mise en oeuvre pour permettre des essais en laboratoire. Elle présente des dimensions de 750 mm x 600 mm x 30 mm avec une capacité de 13,5 L de solvant. La hauteur du solvant est donc de 30 mm avec une inclinaison de 1,5°. L'activation ultrasonore est assurée par une série de 16 cônes collés en fond de cuve correspondant à 2 générateurs qui fournissent un total de 800 W mais l'extraction des cristaux liquides ne nécessite que 30% de la puissance totale soit 240 W.

Le solvant utilisé est l'acétone pure. La solution contenue dans la cuve 1 est donc de l'acétone.

Un support provenant d'un écran LCD est traité en 44s selon le procédé de l'invention, quelles que soient ses diemnsions.

Après traitement de plusieurs écrans, l'acétone contenant les cristaux liquides dissouts est distillée. Les essais de distillation ont été réalisés au laboratoire avec un évaporateur rotatif sous vide.

Pour accélérer davantage l'évaporation, le ballon 1 est plongé dans un bain marie d'eau chaude (la température est ajustée en fonction du point d'ébullition du solvant). On procède ainsi à l'évaporation jusqu'à disparition complète du solvant du ballon. D'un autre côté on recueille le solvant après condensation, autrement dit le solvant recyclé.

Le résidu de la distillation correspondant aux cristaux liquides récupérés et du solvant résiduel est placé dans une étuve maintenue à une température qui prend en compte le point d'ébullition du solvant (56°C pour l'acétone) pendant environ 3h. A la sortie de l'étuve, des opérations successives de pesées et séjours à l'étuve sont effectuées environ toutes les dix minutes pour contrôler l'évaporation complète des résidus de solvant. Cet objectif est atteint lorsqu'une stabilisation de la masse de l'échantillon de cristaux liquides est observée.

La bonne qualité de ces matières a été vérifiée grâce à différentes études de caractérisation physico-chimique. Il ressort des analyses par spectroscopie infrarouge et RMN ¹H que les produits récupérés présentant des noyaux aromatiques et des chaînes aliphatiques conformes à la description théorique de ces molécules. En spectroscopie infrarouge (IRTF), on observe des liaisons C-H (autour de 3000 cm⁻¹) des noyaux aromatiques confirmés par des pics représentant les vibrations des liaisons C-H (1600-1500 cm⁻¹) ou C=C (970-960 cm⁻¹) et des chaînes aliphatiques - CH₂ (1470-1430 cm⁻¹), CH₃ (1400-1350 cm⁻¹) - et/ou alors d'autres types liaisons telles que N-H (1640-1480 cm⁻¹) ou C-O (1150 cm⁻¹). En spectroscopie RMN ¹H, on observe des signaux correspondant aux groupements chimiques identifiés par IRTF.

La chromatographie en phase gazeuse couplée à la spectroscopie de masse nous a permis d'identifier un certain nombre de cristaux liquides contenus dans les dalles LCD.

Il est à noter qu'au cours de l'analyse, les premières molécules qui migrent dans la colonne, et qui sont représentées sur l'axe des abscisses (X) entre 0 et 14 minutes de temps d'élution, correspondent à des entités reléguées par le septum (pastille en caoutchouc localisée en tête de colonne).

Les molécules correspondantes aux pics du chromatogramme ont été identifiées à la suite de l'exploitation des résultats de la spectrométrie de masse grâce à l'exploitation d'une base de données regroupant un certain nombre de structures moléculaires connues.

Les molécules suivantes ont été identifiées grâce à cette technique dans le cas d'un écran de la marque Samsung® traité selon le procédé de l'invention:
- 1-methoxy-4-(4-propylcyclohexyl) benzène trans-p-(4-propylcyclohexyl) phenetole ; CAS-81936-32 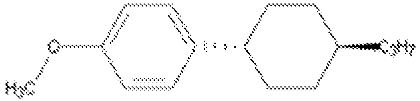
- 1-Ethoxy-4-(4-propyl-cyclohexyl-benzène trans-p-(4-propylcyclohexyl)phenetole ; CAS-RN: 80944-44-1 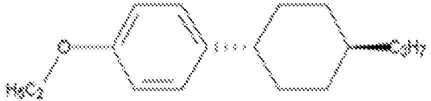
- 4'-Propyl-4-*p*-tolyl-bicyclohexyl benzène, 1-methyl-4-[(*trans,trans*)-4'-propyl[1,1'-bicyclohexyl]-4-yl], CAS/84656-75-7

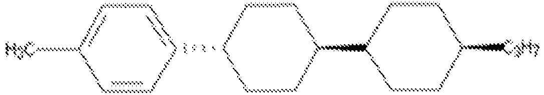

## Revendications

1. Procédé d'extraction des cristaux liquides contenus dans élément du type comprenant un premier et un deuxième support présentant chacun une face fonctionnelle, lesdites faces fonctionnelles étant montées en regard l'une l'autre de manière à créer un espace contenant lesdits cristaux liquides, selon lequel on sépare lesdits premier et deuxième supports l'un de l'autre, lesdites faces fonctionnelles étant alors au moins partiellement recouvertes d'une couche de cristaux liquides, **caractérisé en ce que** l'on met en contact ladite face fonctionnelle dudit premier et/ou deuxième support avec une solution contenant au moins un solvant apte à dissoudre lesdits cristaux liquides présents sur ladite face fonctionnelle de manière à ce que ladite solution ne soit pas en contact avec la face opposée à ladite face fonctionnelle.

2. Procédé selon la revendication 1, **caractérisé en ce que** ladite solution est une solution organique contenant au moins un solvant choisi parmi l'acétone, l'isopropanol, l'éther de pétrole et les mélanges d'au moins deux de ces solvants.

3. Procédé selon l'une quelconque des revendications précédentes, **caractérisé en ce que** l'on déplace ledit premier et/ou deuxième support dans ladite solution et/ou. **en ce qu'**on dispose ladite face fonctionnelle de manière à ce qu'elle soit inclinée vers la surface libre de ladite solution.

4. Procédé selon l'une quelconque des revendications précédentes, **caractérisé en ce que** l'on augmente le niveau de ladite solution dans ledit bain de manière à mettre en contact ladite face fonctionnelle avec ladite surface libre de ladite solution.

5. Procédé selon l'une quelconque des revendications précédentes, **caractérisé en ce que** ladite solution est à une température sensiblement égale ou supérieure à 15°C et sensiblement égale ou inférieure à 30°C, de préférence sensiblement égale 20°C, **en ce que** l'on crée éventuellement une circulation de ladite solution au moins au niveau de ladite surface libre de ladite solution et/ou **en ce que** l'on maintient la température de ladite solution en contact avec ladite face fonctionnelle notamment par ajout d'une quantité donnée d'une solution contenant au moins un solvant apte à dissoudre les cristaux liquides, ladite solution étant à une température donnée.

6. Procédé selon l'une quelconque des revendications précédentes, **caractérisé en ce qu'**on génère des ultrasons dans ladite solution de manière à provoquer le phénomène de cavitation, notamment au niveau de ladite face fonctionnelle, **en ce que** lesdits ultrasons ont notamment une fréquence sensiblement égale ou supérieure ou égale à 15KHz et sensiblement égale ou inférieure ou égale à 30KHz et/ou une densité de puissance sensiblement égale ou supérieure à 8 W/L et de préférence sensiblement égale à 24W/L.

7. Procédé selon l'une quelconque des revendications précédentes, **caractérisé en ce que** ledit premier et/ou deuxième support comporte une face fonctionnelle recouverte d'un filtre coloré lui-même au moins partiellement recouvert par une couche d'ITO et **en ce que** ladite face opposée dudit premier et/ou deuxième support comporte un film solide en matériau soluble dans ladite solution.

8. Procédé selon l'une quelconque des revendications précédentes, **caractérisé en ce que** lorsque la concentration en cristaux liquides dans ladite solution atteint une valeur donnée, on distille, de préférence sous vide, ladite solution de manière à récupérer un mélange de cristaux liquides, **en ce que** éventuellement l'on filtre ledit mélange de cristaux liquides obtenu et éventuellement après filtration, on sépare par chromatographie les différents cristaux liquides en réalisant une chromatographie éclair dudit mélange de manière à obtenir au moins deux fractions.

9. Procédé selon la revendication 9, **caractérisé en ce que** l'on analyse une petite quantité de chacune desdites fractions afin de déterminer la composition dudit mélange et de choisir les paramètres opératoires permettant de séparer les divers cristaux liquides contenus dans ladite fraction et **en ce que** l'on fait passer le reste de ladite fraction sur une colonne chromatographique préparative en utilisant lesdits paramètres opératoires et **en ce que** lorsque la concentration en cristaux liquides dans ladite solution atteint ladite valeur donnée, éventuellement on renouvelle ladite solution et on teste sur ladite solution contenant ladite quantité donnée de cristaux liquides, lesdits paramètres opératoires déterminés lors du traitement des fractions obtenues la solution précédente.

10. Dispositif permettant la mise en oeuvre du procédé selon l'une quelconque des revendications précédentes, ledit dispositif comprenant au moins une cuve (1) remplie d'une solution contenant au moins un solvant apte à dissoudre les cristaux liquides, ladite solution formant une surface libre, ledit dispositif comportant en outre, des moyens de convoyage (50) d'un support présentant une face fonctionnelle au moins partiellement recouverte d'un film de cristaux liquides, ledit dispositif étant **caractérisé en ce que** ladite cuve (1) et lesdits moyens de convoyage sont adaptés pour mettre en contact ladite face fonctionnelle avec ladite solution de manière à ce que ladite solution ne soit pas en contact avec la face opposée à ladite face fonctionnelle.

11. Dispositif selon la revendication 10, **caractérisé en ce que** lesdits moyens de convoyage sont conformés pour faire affleurer ladite face fonctionnelle au niveau de ladite surface libre.

12. Dispositif selon l'une des revendications 10 à 11, **caractérisé en ce que** lesdits moyens de convoyage comportent au moins un câble apte à venir en contact avec ladite face fonctionnelle pour supporter ledit support

13. Dispositif selon l'une quelconque des revendications 10 à 12, **caractérisé en ce que** ladite cuve (21) comporte des moyens générateurs d'ultrasons (3).

14. Dispositif selon l'une quelconque des revendications 10 à 13, **caractérisé en ce que** ladite cuve (1) comporte un bord sensiblement au niveau duquel se situe ladite surface libre formée par ladite solution, **en ce qu'**au moins une ouverture de débordement (13) est ménagée dans ledit bord, **en ce que** ladite cuve (1) comprend, en outre, un bac de récupération (7) adapté pour recevoir la solution qui déborde par ladite ouverture de débordement (13) et **en ce que** ledit dispositif comporte des moyens formant pompe (9) conformés pour injecter la solution contenue dans ledit bac de récupération dans ladite cuve (1) et créer ainsi une circulation de ladite solution dans ladite cuve.

15. Dispositif selon l'une quelconque des revendications 10 à 14, **caractérisé en ce qu'**il comporte, en outre, une colonne à distiller (100) permettant de séparer les cristaux liquides de ladite solution, un filtre (200) pour filtrer le mélange de cristaux liquides obtenus par distillation, une colonne de chromatographie éclair pour fractionner le mélange filtré, une colonne analytique couplée à des moyens d'identification des composés contenus dans chacune des fractions pour définir les paramètres opératoires à mettre en oeuvre pour séparer lesdits composés et une colonne préparative pour séparer lesdits composés de ladite fraction qui est commandée par des moyens de contrôle couplés à ladite colonne analytique et auxdits moyens d'identification de manière à fonctionner en mettant en oeuvre lesdits paramètres opératoires.

## Patentansprüche

1. Verfahren zur Extraktion von Flüssigkristallen, welche enthalten sind in einem Element des Typs, welcher einen ersten und einen zweiten Träger aufweist, welche jeder eine Funktionsfläche haben, wobei besagte Funktionsflächen einander gegenüber montiert sind, derart, dass ein Raum erzeugt wird, welcher besagte Flüssigkristalle enthält, wobei besagte erste und zweite Supporte voneinander getrennt werden, wobei besagte Funktionsflächen dann wenigstens partiell bedeckt sind von einer Flüssigkristall-Schicht, **dadurch gekennzeichnet, dass** besagte Funktionsfläche des besagten ersten und/oder zweitens Supports mit einer Lösung in Kontakt gebracht wird, welche wenigstens ein Lösemittel enthält, welches geeignet ist, besagte Flüssigkristalle, welche auf besagter Funktionsfläche präsent sind, zu lösen, derart, dass besagte Lösung nicht mit der entgegengesetzten Fläche der besagten Funktionsfläche in Kontakt ist.

2. Verfahren gemäß Anspruch 1, **dadurch gekennzeichnet, dass** besagte Lösung eine organische Lösung ist, welche wenigstens ein Lösemittel ausgewählt aus Aceton, Isopropanol, Petrolether und Mischung von wenigstens zwei dieser Lösemittel enthält.

3. Verfahren gemäß irgendeinem der vorangegangenen Ansprüche, **dadurch gekennzeichnet, dass** besagter erster und/oder zweiter Träger in besagter Lösung bewegt wird und/oder dadurch, dass besagte Funktionsfläche derart angeordnet wird, dass sie in Richtung der freien Oberfläche der besagten Lösung geneigt ist.

4. Verfahren gemäß irgendeinem der vorangegangenen Ansprüche, **dadurch gekennzeichnet, dass** das Niveau von besagter Lösung in besagtem Bad erhöht wird, derart, dass besagte Funktionsfläche mit besagter freier Oberfläche von besagter Lösung in Kontakt gebracht wird.

5. Verfahren gemäß irgendeinem der vorangegangenen Ansprüche, **dadurch gekennzeichnet, dass** besagte Lösung bei einer Temperatur etwa gleich oder höher als 15 °C und etwa gleich oder niedriger als 30 °C, vorzugsweise etwa gleich 20 °C, ist, dadurch, dass gegebenenfalls eine Zirkulation von besagter Lösung wenigstens auf dem Niveau von besagter freier Oberfläche von besagter Lösung kreiert wird und/oder dadurch, dass die Temperatur von besagter Lösung in Kontakt mit besagter Funktionsfläche erhalten wird, insbesondere durch Zugabe einer gegebenen Menge einer Lösung, welche wenigstens ein Lösemittel enthält, welches geeignet ist die Flüssigkristalle zu lösen, wobei besagte Lösung eine gegebene Temperatur hat.

6. Verfahren gemäß irgendeinem der vorangegangenen Ansprüche, **dadurch gekennzeichnet, dass** in besagter Lösung Ultraschall derart erzeugt wird, dass das Phänomen der Kavitation herbeigeführt wird, insbesondere auf Niveau von besagter Funktionsfläche, dadurch, dass besagter Ultraschall insbesondere eine Frequenz etwa gleich oder größer oder gleich 15 KHz und etwa gleich oder kleiner oder gleich 30 KHz und/oder eine Energiedichte etwa gleich oder größer 8 W/L und vorzugsweise etwa gleich 24 W/L hat.

7. Verfahren gemäß irgendeinem der vorangegangenen Ansprüche, **dadurch gekennzeichnet, dass** besagter erster und/oder zweiter Träger eine Funktionsfläche aufweist, welche bedeckt ist von einem farbigen Filter, welcher selbst wenigstens partiell bedeckt ist von einer ITO-Schicht und dadurch, dass besagte Fläche gegenüber des besagten ersten und/oder zweiten Supports einen festen Film von in der besagten Lösung löslichem Material aufweist.

8. Verfahren gemäß irgendeinem der vorangegangenen Ansprüche, **dadurch gekennzeichnet, dass** wenn die Konzentration an Flüssigkristallen in besagter Lösung einen gegebenen Wert erreicht, besagte Lösung derart, vorzugsweise unter Vakuum, destilliert wird, dass eine Mischung von Flüssigkristallen zurückerhalten wird, dadurch, dass gegebenenfalls besagte erhaltene Mischung von Flüssigkristallen filtriert wird und gegebenenfalls nach der Filtration die verschiedenen Flüssigkristalle durch Chromatographie getrennt werden, wobei eine Flash-Chromatographie der besagten Mischung derart realisiert wird, dass wenigstens zwei Fraktionen erhalten werden.

9. Verfahren gemäß Anspruch 9, **dadurch gekennzeichnet, dass** eine kleine Menge von jeder der besagten Fraktionen analysiert wird, um die Zusammensetzung der besagten Mischung zu ermitteln und um die Betriebsparameter auszuwählen, welche es erlauben, die verschiedenen Flüssigkristalle, welche in besagter Fraktion enthalten sind, zu trennen und dadurch, dass der Rest von besagter Fraktion unter Verwendung besagter Betriebsparameter über eine präparative Säulenchromatographie passieren gelassen wird und dadurch, dass wenn die Konzentration an Flüssigkristallen in besagter Lösung besagten gegebenen Wert erreicht, gegebenenfalls besagte Lösung erneuert wird und an besagter Lösung, welche besagte gegebene Menge von Flüssigkristallen enthält, besagte Betriebsparameter, welche während der Behandlung der erhaltenen Fraktionen von der vorangegangene Lösung ermittelt werden, getestet werden.

10. Vorrichtung, welche die Durchführung des Verfahrens gemäß irgendeinem der vorangegangenen Ansprüche ermöglicht, wobei besagte Vorrichtung aufweist
wenigstens ein Gefäß (1), welches mit einer Lösung gefüllt ist, welche wenigstens ein Lösemittel enthält, welches geeignet ist, die Flüssigkristalle zu lösen, wobei besagte Lösung eine freie Oberfläche bildet, wobei besagte Vorrichtung aufweist
weiterhin Mittel zur Bewegung (50)
von einem Support, welcher eine Funktionsfläche aufweist, welche wenigstens partiell mit einem Film von Flüssigkristallen bedeckt ist, wobei besagte Vorrichtung **dadurch gekennzeichnet ist, dass**
besagtes Gefäß (1) und besagte
Mittel zur Bewegung angepasst sind zum derart in Kontakt bringen von besagter Funktionsfläche mit besagter Lösung, dass besagte Lösung nicht in Kontakt ist mit der Fläche gegenüberliegend von besagter Funktionsfläche.

11. Vorrichtung gemäß Anspruch 10, **dadurch gekennzeichnet, dass** besagte Mittel zur Bewegung adaptiert sind, um besagte Funktionsfläche auf Niveau von besagter, freier Oberfläche auftreten zu lassen.

12. Vorrichtung gemäß irgendeinem der Ansprüche 10 bis 11, **dadurch gekennzeichnet, dass** besagte Mittel zur Bewegung wenigstens ein Kabel aufweisen, welches geeignet ist, mit besagter Funktionsfläche in Kontakt zu kommen, um besagten Träger zu unterstützen.

13. Vorrichtung gemäß irgendeinem der Ansprüche 10 bis 12, **dadurch gekennzeichnet, dass** besagtes Gefäß (21) Ultraschall erzeugende Mittel (3) aufweist.

14. Vorrichtung gemäß irgendeinem der Ansprüche 10 bis 13, **dadurch gekennzeichnet, dass** besagtes Gefäß (1) einen Rand aufweist auf dessen Niveau sich etwa besagte, freie Oberfläche befindet, welche von besagter Lösung gebildet wird, dadurch, dass wenigstens eine Überlauföffnung (13) in besagtem Rand ausgebildet ist, dadurch, dass besagtes Gefäß (1) weiterhin einen Auffangbehälter (7) adaptiert zum Auffangen der Lösung aufweist, welche über besagte Überlauföffnung (13) überläuft und dadurch, dass besagte Vorrichtung Mittel aufweist, welche eine Pumpe (9) bilden, welche angepasst sind zum Injizieren der Lösung, welche in besagtem Auffangbehälter in besagtem Gefäß (1) enthalten ist, und zum auf diese Weise Kreieren einer Zirkulation von besagter Lösung in besagtem Gefäß.

15. Vorrichtung gemäß irgendeinem der Ansprüche 10 bis 14, **dadurch gekennzeichnet, dass** sie weiterhin aufweist, eine Destillationskolonne (100), welche ermöglicht, die Flüssigkristalle von besagter Lösung zu trennen, einen Filter (200) zum Filtrieren der Mischung von Flüssigkristallen, welche durch Destillation erhalten wurden, eine Flash-Chromatographiesäule zum Fraktionieren der filtrierten Mischung, eine analytische Säule, welche an Mittel zur Identifikation von Verbindungen, welche in jeder der Fraktionen enthalten sind, gekoppelt ist, zum Definieren der Betriebsparameter zur Durchführung, um besagte Verbindungen zu trennen, und eine präparative Säule zum Trennen besagter Verbindungen von besagter Fraktion, welche gesteuert wird von Steuerungsmitteln, welche an besagte analytische Säule und an besagte Mittel der Identifikation gekoppelt sind, derart, dass sie derart arbeiten, dass sie die besagten Betriebsparameter umsetzen.

## Claims

1. Method for extracting liquid crystals contained in an element of the type comprising a first and a second support, each having a functional face, said functional faces being mounted one opposite the other in order to create a space containing said liquid crystals, according to which said first and second supports are separated one from the other, said functional faces then being at least partially covered by a layer of liquid crystals, **characterised in that** said functional face of said first and/or second support is brought in contact with a solution containing at least one solvent which is able to dissolve said liquid crystals present on said functional face such that said solution is not in contact with the face opposite said functional face.

2. Method according to claim 1, **characterised in that** said solution is an organic solution containing at least one solvent chosen from acetone, isopropanol, petroleum ether and mixtures of at least two of these solvents.

3. Method according to any of the preceding claims, **characterised in that** said first and/or second support is placed in said solution and/or **in that** said functional face is disposed such that it is inclined towards the free surface of said solution.

4. Method according to any of the preceding claims, **characterised in that** the level of said solution in said bath is increased in order to bring said functional face in contact with said free surface of said solution.

5. Method according to any of the preceding claims, **characterised in that** said solution is at a temperature substantially equal to or greater than 15°C and substantially equal to or less than 30°C, preferably substantially equal to 20°C, **in that** possibly a circulation of said solution is created at least at the level of said free surface of said solution and/or **in that** the temperature of said solution in contact with said functional face is maintained, in particular by adding a given quantity of a solution containing at least one solvent which is able to dissolve the liquid crystals, said solution being at a given temperature.

6. Method according to any of the preceding claims, **characterised in that** ultrasonic waves are generated in said solution in order to cause the phenomenon of cavitation, in particular at the level of said functional face, **in that** said ultrasonic waves have, in particular, a frequency substantially equal to or greater than or equal to 15 KHz and substantially equal to or less than or equal to 30 KHz and/or a power density substantially equal to or greater than 8 W/L and preferably substantially equal to 24 W/L.

7. Method according to any of the preceding claims, **characterised in that** said first and/or second support comprises a functional face covered by a coloured filter itself at least partially covered by a layer of ITO and **in that** said opposite face of said first and/or second support comprises a solid film made of a material which is soluble in said solution.

8. Method according to any of the preceding claims, **characterised in that** when the concentration of liquid crystals in said solution reaches a given value, said solution is distilled, preferably under vacuum, in order to recover a mixture of liquid crystals, **in that** possibly said obtained mixture of liquid crystals is filtered and possibly, after filtration, the various liquid crystals are separated by chromatography by implementing a flash chromatography of said mixture in order to obtain at least two fractions.

9. Method according to claim 9, **characterised in that** a small quantity of each of said fractions is analysed in order to determine the composition of said mixture and to choose the operating parameters which make it possible to separate the various liquid crystals contained in said fraction and **in that** the remainder of said fraction is passed over a preparatory chromatographic column using said operating parameters and **in that** when the concentration of liquid crystals in said solution reaches said given value, possibly said solution is renewed, and said operating parameters determined during the treatment of the obtained fractions from the preceding solution are tested on said solution containing said given quantity of liquid crystals.

10. Device allowing implementation of the method according to any of the preceding claims, said device comprising
at least one tank (1) filled with a solution containing at least one solvent which is able to dissolve the liquid crystals, said solution forming a free surface, said device comprising furthermore means (50) for conveying a support which has a functional face at least partially covered by a film of liquid crystals, said device being **characterised in that**
said tank (1) and said conveying means are adapted in order to bring said functional face in contact with said solution such that said solution is not in contact with the face opposite said functional face.

11. Device according to claim 10, **characterised in that** said conveying means are configured in order to make said functional face flush at the level of said free surface.

12. Device according to one of the claims 10 to 11, **characterised in that** said conveying means comprise at least one cable which is able to come in contact with said functional face in order to support said support.

13. Device according to any of the claims 10 to 12, **characterised in that** said tank (21) comprises means for generating ultrasonic waves (3).

14. Device according to any of the claims 10 to 13, **characterised in that** said vat (1) comprises an edge substantially at the level of which said free surface formed by said solution is situated, **in that** at least one overflow opening (13) is provided in said edge, **in that** said tank (1) comprises, furthermore, a recovery trough (7) which is adapted to receive the solution which overflows via said overflow opening (13) and **in that** said device comprises means forming a pump (9) which are configured to inject the solution contained in said recovery trough into said tank (1) and thus to create a circulation of said solution in said tank.

15. Device according to any of the claims 10 to 14, **characterised in that** it comprises, furthermore, a distillation column (100) which makes it possible to separate the liquid crystals from said solution, a filter (200) in order to filter the mixture of liquid crystals obtained by distillation, a flash chromatography column in order to fractionate the filtered mixture, an analysis column coupled to means for identifying the compounds contained in each of the fractions in order to define the operating parameters to be implemented in order to separate said compounds and a preparatory column in order to separate said compounds of said fraction which is controlled by control means coupled to said analysis column and to said identification means in order to function by implementing said operating parameters.
Translators note: it has been assumed that a "de" has been omitted before the final "la solution précédente" of claim 9 (line 21).
Claim 9 as amended also reads "method according to claim 9".
